# EUROPEAN PATENT APPLICATION

(11) **EP 2 584 184 A2**
(43) Date of publication of application: **24.04.2013**
(21) Application number: 12185811.2
(22) Date of filing: 25.09.2012
(51) Int. Cl.: F02K 1/09

(54) **Variable area nozzle for gas turbine engine**

(30) Priority: 17.10.2011 GB 201117824
(71) Applicant: Rolls-Royce plc, London SW1E 6AT (GB)
(72) Inventor: Kennea, Robin Charles, Nottingham, NG1 5AU (GB); Howarth, Nicholas, Derby, DE23 6FY (GB)
(74) Representative: Hill, Matthew Ross

(57) **Abstract**

A variable area nozzle (200) for a gas turbine engine is provided that has a circumferential outer boundary (100), which may be formed at least in part by the nacelle of a turbofan engine, that has a fixed portion (110) and a movable portion (120). The movable portion is movable by an actuator (160) both upstream and downstream from a datum position. This allows the exit area (NA) of the variable area nozzle to be adjusted according to flight conditions. When the movable portion is at or upstream of the datum position, there is no flow path between the fixed and movable portions. This enables the nozzle exit area to be optimized throughout flight, for example during changing cruise conditions, without inducing unwanted and inefficient flow structures between the fixed and movable portions and without allowing flow to leak out of the outer boundary of the nozzle.

## Description

This invention is concerned with variable area nozzles, and in particular with variable area nozzles for gas turbine engines.

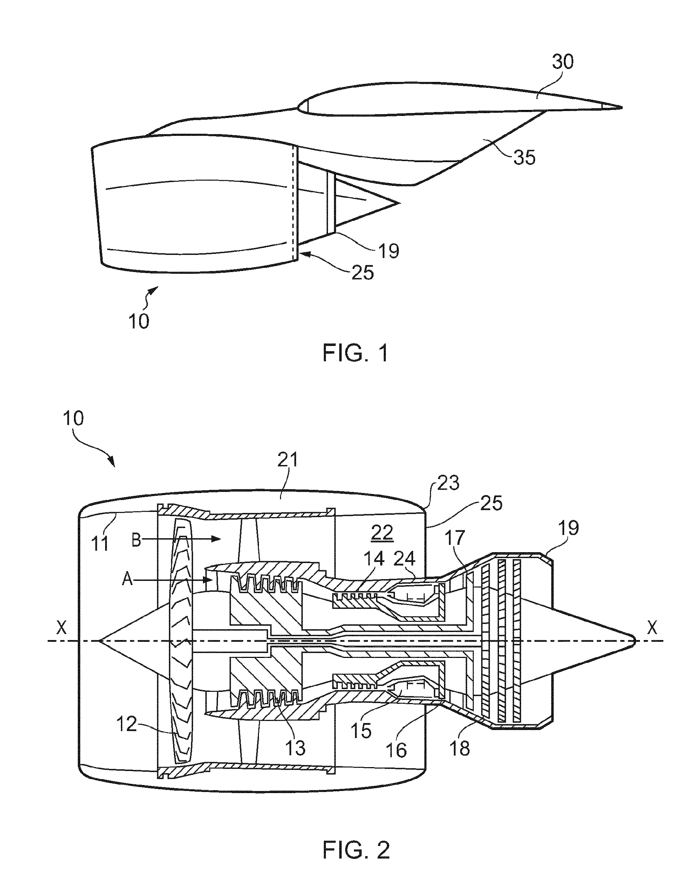

A ducted fan gas turbine engine 10 is shown in Figure 1 on the wing 30 of an aircraft. The gas turbine engine 10 is attached to the wing 30 using a pylon 35. Figure 2 shows a cross-section through the gas turbine engine 10.

The gas turbine engine 10 has a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. The ducted fan gas turbine engine 10 has a bypass duct 22. A bypass exhaust nozzle 25 is defined between the trailing edge of a bypass duct casing 23 and a core casing 24.

The gas turbine engine 10 works in a conventional manner so that air entering through the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

In the example shown in Figures 1 and 2, the bypass exhaust nozzle 25 is defined by a fixed bypass duct casing 23 and a fixed core casing 24. However, the optimum exit area of the bypass exhaust nozzle 25 depends on the operating condition of the gas turbine engine 10. For example, the optimum exit area of the bypass exhaust nozzle 25 may depend on the flight phase of an aircraft to whose wing 30 the gas turbine engine 10 is attached. Thus, for example, the fixed geometry of the bypass duct casing 23 and the core casing 24 in the Figure 1 and 2 example may typically be a compromise between providing the optimum bypass exhaust nozzle 25 area at take-off, landing, and cruise.

Some gas turbine engines therefore provide so-called variable area nozzles. Such variable area nozzles have movable geometry which enables the area of the bypass exhaust nozzle 25 to be varied. For example, the geometry may move so as to provide a larger bypass exhaust nozzle 25 exit area at take-off/landing than at cruise.

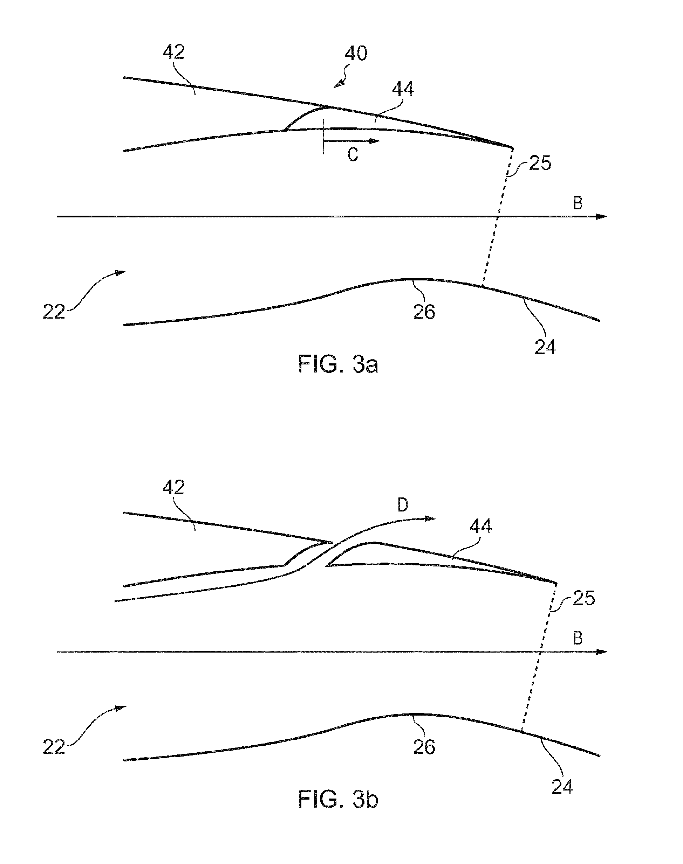

An example of movable geometry that may be employed to change the exit area of the bypass exhaust nozzle is shown in Figures 3a and 3b. In the Figure 3a and 3b example, the bypass flow B is shown through the bypass duct 22 (the arrow B is a schematic representation of the bypass flow and may not represent the precise bypass flow direction). The bypass duct 22 is formed between the core casing 24 and a bypass duct casing 40. The bypass duct casing 40 comprises a first, fixed portion 42 (which may be part of what is commonly referred to as a nacelle). The bypass duct casing 40 also comprises a second portion 44 that is movable in an axially rearward direction (or downstream direction) C relative to the closed position shown in Figure 3a. The mechanism for moving the second portion 44 is not shown in Figures 3a and 3b.

The core casing 24 in the Figure 3a and 3b example has a profile which includes a "bump" 26. This bump 26 extends in a radial direction relative to the engine axis X-X. Due to the shape and position of the bump 26, rearward axial translation C of the second portion 44 of the bypass duct casing 40 (from the configuration shown in Figure 3a to the configuration shown in Figure 3b) results in an increase in the exit area of the bypass exhaust nozzle 25. This arrangement also opens a secondary nozzle flow path D when the second portion 44 is translated axially rearward. The secondary flow path D effectively further increases the nozzle exit area.

Thus, the arrangement shown in Figures 3a and 3b can be used to increase the exit area of the bypass exhaust nozzle 25 from a datum position, for example for use during take-off/landing. However, the Figure 3a and 3b example is unable to provide an optimized nozzle geometry for all flight phases. For example, the optimum exit area of the nozzle 25 changes during cruise depending on conditions (such as flight speed, air conditions and weight, which changes as fuel is burned during flight). As such, in order to provide the optimum area of the nozzle 25 at all cruise conditions, for example, the second portion 44 of the bypass duct casing 40 would in some cases need to be moved rearward relative to the closed position shown in Figure 3a. The rearward movement would typically be less than that shown in Figure 3b, which is intended to represent a take-off/landing configuration.

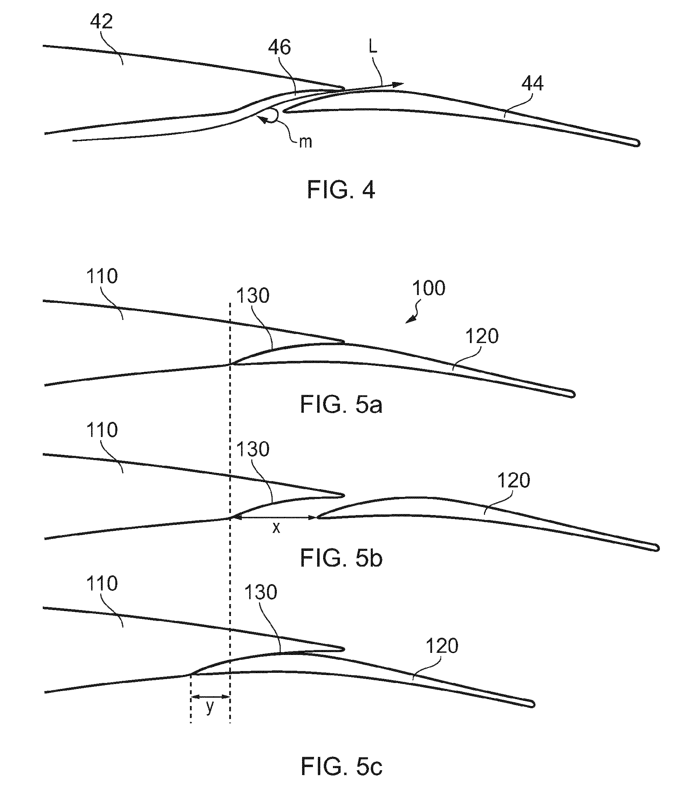

A close-up of a configuration that might be required to provide optimum nozzle 25 exit area during certain cruise conditions is shown in Figure 4. In the Figure 4 configuration, the second portion 44 of the bypass duct casing 40 has been shifted slightly axially rearward in order to generate the optimum nozzle exit area. As a result, there is a discontinuity, gap, or step, between the first (fixed) portion 42 and the second portion of the bypass duct casing 40. This results in flow losses, for example due to leakage flow L through a gap 46 and/or recirculation flow M, which may be a standing circumferential vortex, and/or disturbance of the external flow (i.e flow around the outside of the engine 10) due to the step created on the outer surface of the nacelle. Such losses result in reduced engine thrust and/or efficiency and/or drag, for example increased nacelle drag. As such, with the Figures 3 and 4 configuration the bypass exhaust nozzle 25 either has to present a sub-optimal outlet area to the bypass flow B at some operating conditions (by retaining the closed configuration shown in Figure 3b throughout cruise), or the nozzle outlet area can be optimized, but at the expense of presenting a loss-inducing discontinuity to the flow (as in the Figure 4 configuration). Thus, the configuration of Figures 3 and 4 cannot provide optimal nozzle flow at all cruise conditions.

According to an aspect of the invention, there is provided a variable area nozzle for a gas turbine engine. The variable area nozzle comprises an inner boundary and an outer boundary defining a generally annular nozzle flow path therebetween. The outer boundary comprises a fixed portion and a movable portion. The variable area nozzle comprises an actuator configured to move the movable portion in either an upstream direction or a downstream direction relative to a datum position. A biasing element configured to provide a biasing force to at least a part of the movable portion in the downstream direction when the movable portion is moved to an upstream position (relative to datum) is provided. An exit area of the nozzle flow path is defined between the movable portion (for example the downstream edge thereof) and the inner boundary. The inner boundary is shaped such that the exit area is dependent on the position of the movable portion. When the movable portion is at the datum position or upstream thereof, the fixed portion and the movable portion are arranged so as to have no flow path therebetween.

The outer boundary, or a part thereof (such as the fixed portion), may be a part of the nacelle. The inner boundary may be formed by the core shroud, or cowl. The nozzle flow path may be part of a bypass flow through the gas turbine engine, which may be a turbofan. The upstream-downstream direction may be with respect to the direction of travel of the engine and/or the general flow direction through the nozzle flow path. The upstream-downstream direction may be parallel to an axial direction X-X of the engine.

According to this arrangement, a movable portion of a variable area nozzle can move both upstream and downstream of a datum position. When moved to an upstream direction, there is no flow path between the movable and fixed portions. As such, the outer boundary may be sealed when the movable portion is in the datum position or upstream thereof. This may mean that when the movable portion is in a datum position or upstream thereof, at least a part of the fixed portion and at least a part of the movable portion are engaged, for example are in contact, for example at an interface. This may allow the geometry of the nozzle to be adjusted to suit all flight conditions, for example all cruise conditions. For example, such an arrangement may allow the nozzle area to be optimized for all cruise conditions and/or climb conditions, whilst minimizing/eliminating losses created by a lack of seal between the movable portion and the fixed portion.

The datum position may simply be the most downstream position of the moveable portion at which there is no flow path between the moveable portion and the fixed portion. The datum position may, for example, correspond to the most downstream position of the moveable portion during cruise (and optionally climb) that is required to ensure that the nozzle exit area is optimized throughout cruise (and optionally climb). Thus, by way of example, if the moveable portion is moved upstream during cruise to maintain the optimum exit area, the datum position may correspond to the position of the moveable portion at the start of cruise. By way of further example, if the moveable portion is moved downstream during cruise to maintain the optimum exit area, the datum position may correspond to the position of the moveable portion at the end of cruise. Whether the moveable portion is moved upstream or downstream during cruise to maintain the optimum exit area may depend on a number of factors such as, for example, the shape of the inner boundary.

Shaping the inner boundary such that the exit area is dependent on the position of the moveable portion means that the exit area can be varied simply be changing the position of the moveable portion (for example axially) whilst retaining sealing (or no flow path) between the moveable portion and the fixed portion (for example an air tight seal to prevent the relatively high pressure air in the nozzle escaping through the outer boundary, for example between the moveable portion and the fixed portion), at least when the moveable portion is at the datum position or upstream thereof. The arrangement may thus allow simultaneous improvements in engine efficiency (for example a reduction in specific fuel consumption) both by varying the exit area (of the nozzle) and by preventing high pressure air escaping, for example trough the outer boundary.

The actuator may thus be arranged to move the moveable portion in a substantially axial direction, and the exit area of the nozzle flow path may be dependent on the axial position of the moveable portion. This may be a particularly effective way of ensuring a seal whilst varying the area of the nozzle.

When the movable portion is at the datum position or upstream thereof, the outer boundary may form a substantially continuous outer surface of the annular nozzle flow path. This may mean that the outer surface (for example a substantially cylindrical outer surface) formed by the outer boundary forming the nozzle flow path may have substantially no discontinuities, steps, or gaps, even between the fixed portion and the movable portion. This may further help to reduce/minimize any losses that may otherwise be generated through unwanted flow disturbance, such as that explained above in relation to Figure 4.

The inner boundary may be shaped such that the exit area increases as the movable portion is moved in the downstream direction from the datum position. The inner boundary may be shaped such that the exit area decreases as the movable portion is moved in the upstream direction from the datum position. Such an arrangement may be formed, for example, using an appropriately positioned "bump" on the inner boundary. According to this feature, the nozzle exit area may be increased from the datum position in the downstream direction, for example for take-off/landing. The nozzle area may be decreased, for example to accommodate changing cruise conditions during flight, by moving the movable portion in the upstream direction from the datum position. The optimum nozzle area may dependent on a wide range of variable, such as flight Mach Number, air pressure, altitude, weight and/or throttle position, amongst others. Purely by way of example, in some flight missions, it may be desirable to have a reduced nozzle area during the climb phase compared with the cruise phase, and/or to gradually reduce the nozzle area through the cruise. The nozzle walls (inner and outer boundaries) may remain substantially airtight, or sealed (for example there may be no gap between the moveable portion and the fixed portion) throughout at least some (for example all) of the cruise and/or climb phases.

The movable portion and the fixed portion may be in contact with each other at an interface when the movable portion is in the datum position and upstream thereof. The biasing element may comprise a flexible membrane. The flexible membrane may be provided at the interface. The flexible membrane may be configured to deform as the movable portion is moved from the datum position to an upstream position.

Such a flexible membrane may be a particularly convenient and effective way of ensuring that there is no flow path between the movable and fixed section and/or that a suitable seal is formed therebetween when the movable portion is in the datum position and upstream thereof. The flexible membrane may be elastically deformable. The flexible membrane may provide a biasing force in the downstream direction when the movable portion is upstream of its datum position.

The biasing element may comprise a hinged portion provided at the interface between the fixed and movable portions. The hinged portion may be configured to rotate as the movable portion is moved from the datum position to an upstream position. The hinge may have a spring, for example a torsion spring, to bias the hinged portion towards a closed position. Such a closed position may be the position of the hinged portion in the absence of any force acting on it from the movable portion. This may be, for example, when the movable portion is at or downstream of the datum position. In some embodiments, the biasing element may comprise both a hinged portion and a flexible membrane.

The variable area nozzle may be arranged such that (depending on the particular arrangement) when the movable portion is in the datum position or in a position downstream thereof, the flexible membrane is in an undeformed state and/or the hinged portion is in a closed position.

Any suitable arrangement of flexible membrane and/or hinged portion may be used. For example, the flexible membrane or hinged portion may be provided on the fixed portion of the outer boundary. For example, the flexible membrane or hinged portion may be provided on a rear, or downstream side of the fixed portion. This may be the region of the fixed portion that engages with the movable portion, for example when the movable portion is at the datum position or upstream thereof. The deformation/movement of the flexible membrane/hinged portion may then by due to the force, in the upstream direction, provided by the movable portion.

Alternatively (or additionally), the flexible membrane or hinged portion may be provided on the movable portion of the outer boundary, for example on an upstream region of the movable portion, which may engage with the fixed portion, for example when the movable portion is at the datum position or upstream thereof. The deformation/movement of the flexible membrane/hinged portion may then be due to the force, in the downstream direction, provided by the fixed portion.

When the movable portion is in the datum position or in a position downstream thereof, the fixed portion of the outer boundary may have a baseline shape in which the flexible membrane or hinged portion form a seal with the rest of the portion (i.e. fixed portion or movable portion) of which it is a part. Thus, the baseline shape may have a substantially continuous surface. However, the surface may have an opening to allow the actuator to pass through.

In examples having a biasing element, the biasing element may comprise a spring. When the movable portion is moved in the upstream direction from the datum position, the spring may be compressed. In this way, the spring may provide a biasing force, for example to the movable portion.

The movable portion may comprise an upstream element and a downstream element.

The upstream element and the downstream element may be connected together by a spring. The downstream element may be movable upstream relative to the upstream element from the datum position through compression of the spring. In such an arrangement, both the upstream element and the downstream element may move when the actuator moves the movable portion in the downstream direction, but only one element (e.g. the downstream element) may move when the actuator moves the movable element in the upstream direction. As such, the upstream element may remain stationary when downstream element moves upstream from the datum position under the action of the actuator.

The upstream element may be connected to the fixed portion by a spring. The downstream element may be movable downstream relative to the upstream element from the datum position. Both the upstream element and the downstream element may be movable upstream relative to the fixed portion through compression of the spring. In such an arrangement, only the downstream element may move when the actuator moves the downstream movable portion in the downstream direction, but both elements may move when the actuator moves the downstream movable element in the upstream direction. As such, the upstream element may remain stationary when downstream element moves downstream from the datum position under the action of the actuator.

The variable area nozzle may further comprise a circumferential seal, which may be arranged to form a substantially airtight seal between the fixed portion and the movable portion. The circumferential seal may be biased such that the substantially airtight seal between the fixed portion and the movable portion is maintained regardless of the position of the movable portion. Additionally or alternatively, the circumferential seal may be biased such that the substantially airtight seal between the fixed portion and the movable portion is maintained when the movable portion moves in the upstream direction from the datum position. The circumferential seal may be, for example, a hinged seal and/or a resiliently biased seal. The circumferential seal may form a seal on the outer boundary, and/or on the freestream facing surfaces between the fixed and movable portions.

In some arrangements, when the movable portion is moved in the downstream direction from the datum, a secondary exit flow area is formed between the fixed portion and the movable portion.

The actuator, or a moving part thereof or attached thereto, may pass through a downstream surface of the fixed portion and/or an upstream surface of the movable portion. For example, the actuator, or a moving part thereof or attached thereto, may pass through a flexible membrane or hinged portion, where these elements are present. As such, the actuator (or a part thereof) may be located in the fixed portion, which may have packaging advantages.

The variable area nozzle described above and herein in relation to the invention may be used in any suitable application. For example, the variable area nozzles may be used in a gas turbine engine (such as, by way of example only, turbojet, turboprop or turbofan engines), for example for use on an aircraft.

Embodiments of the invention will now be described by way of example only, with reference to the accompanying diagrammatic drawings, in which:
Figure 1 is a schematic showing a gas turbine engine mounted on a the wing of an aircraft;
Figure 2 is a cross-section through a gas turbine engine such as that shown in Figure 1;
Figure 3a is a cross-section through a variable area nozzle with the nozzle in a closed configuration;
Figure 3b is a cross-section through the variable area nozzle of Figure 3a with the nozzle in an open configuration;
Figure 4 is an enlarged view of a cross-section through the variable area nozzle of Figures 3a and 3b with the nozzle in a partially open configuration;
Figure 5a shows a cross section through geometry for a variable area nozzle according to the invention with a movable outer boundary portion in the datum configuration;
Figure 5b shows the variable area nozzle of Figure 5a with the movable portion moved to a downstream position relative to the datum position;
Figure 5c shows the variable area nozzle of Figure 5a with the movable portion moved to an upstream position relative to the datum position;
Figure 6 shows a cross section through a variable area nozzle according to the invention showing both the inner and outer boundary walls of the nozzle;
Figure 7a shows a cross section through geometry for a variable area nozzle according to another example of the invention with a movable outer boundary portion in the datum configuration;
Figure 7b shows the variable area nozzle of Figure 7a with the movable portion moved to an upstream position relative to the datum position;
Figure 8a shows a cross section through geometry for a variable area nozzle according to another example of the invention with a movable outer boundary portion in the datum configuration;
Figure 8b shows the variable area nozzle of Figure 8a with the movable portion moved to a downstream position relative to the datum position;
Figure 8c shows the variable area nozzle of Figure 8a with the movable portion moved to an upstream position relative to the datum position;
Figure 9a shows a cross section through geometry for a variable area nozzle according to another example of the invention with a movable outer boundary portion in the datum configuration;
Figure 9b shows the variable area nozzle of Figure 8a with the movable portion moved to an upstream position relative to the datum position; and
Figure 9c shows the variable area nozzle of Figure 8a with the movable portion moved to a downstream position relative to the datum position.

As explained above, a problem with some variable area nozzles is that they are not able to provide optimal nozzle outlet area throughout the flight phase (for example throughout cruise) without generating nozzle surfaces that cause increased drag and/or engine losses. An example of such a surface that may generate loss, for example during some cruise conditions, has been described above in relation to Figure 4.

Figure 5a shows an outer boundary 100 for a variable area nozzle in accordance with the invention. Figure 5a-5c (and other examples described herein) may be a cross section through an axisymmetric outer boundary 100 (about the engine axis X-X), which may, for example, be substantially cylindrical or conical. The outer boundary 100 has a fixed portion 110 and a movable portion 120. The outer boundary 100 has a flexible membrane 130. The flexible membrane 130 may be referred to as a biasing element 130.

In the Figure 5a configuration, the movable portion 120 is shown in a datum position. In this datum configuration, the movable portion 120 is immediately adjacent, or abutting, the flexible membrane 130. The movable portion may be in contact with the flexible membrane 130. The movable portion may be in a position at which it does not exert any force on the flexible membrane 130. As such, the flexible membrane 130 (or at least a deformable portion thereof), in its undeformed state, may have the same shape as the corresponding portion (which may be a leading edge portion) of the movable portion 120. The flexible membrane 130 and the movable portion 120 may tessellate, for example when the movable portion is in the datum position or upstream thereof. The datum position shown in Figure 5a may be used at an appropriate flight condition. For example, the nozzle geometry may typically be set such that the datum position is used at the start of cruise (for example just after the climb phase). However, nozzle geometry may be set such that the datum position is used at other times (for example dependent on the flight mission, aircraft, and/or engine), for example the end of cruise (for example just before decent), or at a typical midpoint during cruise.

Figure 5b shows the Figure 5a variable area nozzle outer boundary 100 with the movable portion 120 moved in the downstream direction. In Figure 5b, the movable portion 120 has moved away from the fixed portion 110. The movement of the movable portion 120 may be said to be along the engine axis (or longitudinal engine axis) X-X. In Figure 5b, the movable portion 120 has been moved a distance x in a downstream axial direction. In some embodiments, translation of the movable portion 120 may not be purely axial, i.e. the translation may have a component that is non-axial. The distance x may be any suitable distance. The distance x may change depending on the flight phase, for example x may be different for take-off and landing, and indeed for different phases within take-off and landing. The distance x at full extent may be, for example, in the range of from 0 mm to 500 mm, for example 50mm to 400 mm, for example 100 mm to 300 mm, for example 150 mm to 200 mm. The distance x at full extent may vary depending on various factors, including the type of engine, and in some embodiments may be outside these ranges.

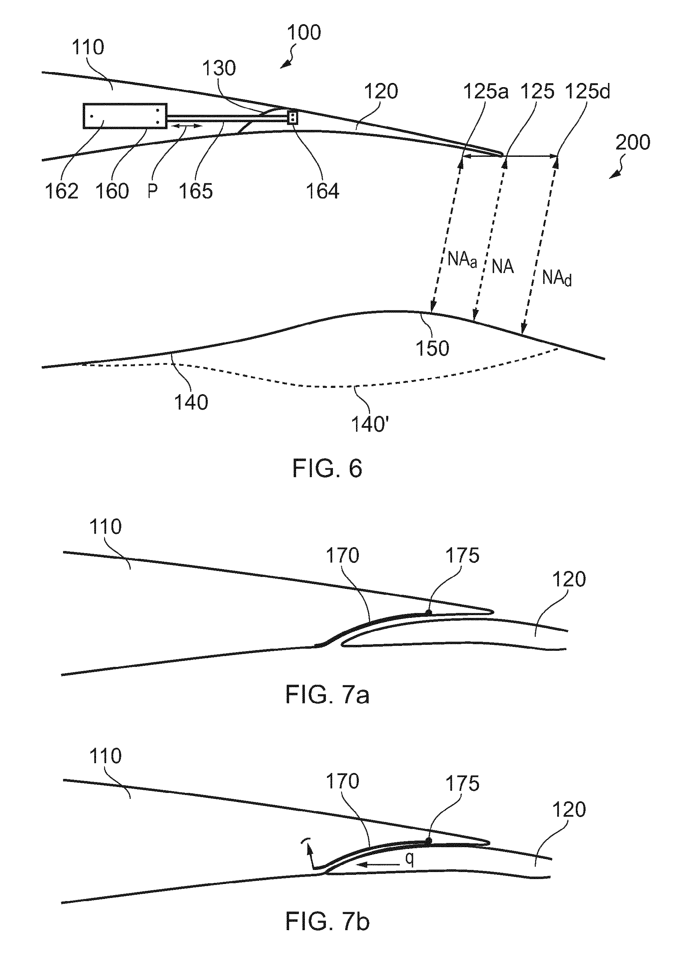

Moving the movable portion 120 to a downstream position, as shown in Figure 5b, may result in an increase in the nozzle exit area. This may be due to, for example, the shape of the inner boundary of the nozzle. Such an effect will be appreciated from Figure 6, which shows a cross section through a nozzle 200 including the outer boundary 100 of Figures 5a to 5c. In Figure 6, the movable portion 120 is shown in the datum position. In the datum position, the nozzle exit area is indicated by the dashed arrow labeled NA. The nozzle exit is formed between the trailing edge 125 of the movable portion 120 and the inner boundary 140 (which may be formed, for example, by a core cowl).

Figure 6 illustrates an actuator 160 that may be used to move the movable portion 120 relative to the fixed portion 110. It will be appreciated that any appropriate actuator 160 could be used. In the Figure 6 example, the actuator 160 has a portion 162 attached to the fixed portion 110 and a portion 164 attached to the movable portion 120. The actuator 160 also has an actuator arm 165 that may slide within the portion 162 attached to the fixed portion 110 of the outer boundary 100, as indicated by the arrow p, for example in the upstream/downstream direction. The actuator arm 165 may pass through the fixed portion 110 and the movable portion 120. The actuator arm 165 may pass through the flexible membrane 130. One or more seals may be provided to seal gaps between the actuator arm 165 and one or more of the fixed portion 110, the movable portion 120 and the flexible membrane 130. One or more actuators 160 and actuator arms 165 may be provided. For example, a circumferential array of actuators 160 and/or actuator arms 165 may be provided. The actuator 160 described herein, or any other suitable actuator, could be used with any embodiment, whether or not explicitly described herein.

Downstream movement of the actuator arm 165 may result in the movable portion 120 moving downstream to a configuration such as that shown in Figure 5b. In this configuration, the trailing edge 125 of the movable portion 120 may also move downstream, to a position labeled 125d in Figure 6. In this downstream position (relative to the datum position), the nozzle exit area is indicated by the dashed arrow NAd. This is representative of the nozzle area produced by the Figure 5b configuration.

As can be seen in Figure 6 (which, like the other Figures, may not necessarily be to scale), the nozzle area NAd when the movable portion 120 is downstream of the datum position is bigger, in this embodiment, than the nozzle area NA when the movable portion 120 is in the datum position. For example, the nozzle area NAd may be up to, for example, at least 30% bigger than the nozzle area NA, for example 25% bigger, 20% bigger, 15% bigger, 10% bigger, 5% bigger, 2% bigger or less than 2% bigger. This is due to the shape of the inner boundary 140. In particular, the inner boundary 140 has a hump 150, or radially extending bump, that extends in the radial direction. The axial position of the maximum radial extent of the hump 150 is upstream of the trailing edge 125 of the movable portion 120 when in the datum position. This means that the downstream axial movement of the movable portion 120 (for example from the datum position) results in a greater radial separation between the trailing edge 125d and the inner boundary 140, and thus a greater nozzle exit area NAd.

Similarly, due to the axial position of the hump 150 on the inner boundary 140 described above, upstream movement of the movable portion 120 (for example from the datum position) results in a smaller radial separation between the trailing edge 125u and the inner boundary 140, and thus a smaller nozzle exit area NAu. Such a configuration is shown in Figure 5c, with the trailing edge of the movable portion 120 being at the position labeled 125u in Figure 6. Again, any suitable actuator, such as the actuator 160 shown in Figure 6, may be used to move the movable portion upstream, for example from the datum position.

In Figure 5c, the movable portion 120 has been moved a distance y, in an upstream axial direction. In some embodiments, the movement may not be entirely axial, i.e. it may have a component in a non-axial direction. The distance y may be any suitable distance. The distance y may change depending on the flight phase, for example y may vary during cruise. The distance y at full extent may be, for example, in the range of from 2 mm to 50 mm, for example 5 mm to 40 mm, for example 10 mm to 25 mm. The distance y at full extent may vary depending on various factors, including the type of engine, and in some embodiments may be outside these ranges.

The nozzle exit area NAu with the movable portion 120 in the upstream position shown in Figure 5c may be up to, for example 10% smaller, for example around 5% smaller, for example around 2% smaller than the nozzle exit area NA when the movable portion 120 is in the datum position shown in Figure 5a.

Alternative configurations of nozzle geometry may be employed. Purely by way of example, the inner boundary 140 may have an alternative shape that is arranged such that downstream movement of the movable portion 120 results in a decrease in nozzle area, and upstream movement of the movable portion 120 results in an increase in nozzle area. An example of such an alternative shape of inner boundary 140' is shown as the dashed line 140' in Figure 6. It will be appreciated that many other shapes of inner and outer boundary walls could be used to give the desired increase/decrease in nozzle area with movement of the movable portion 120.

The description herein relating to the relationship between the axial position of the movable portion 120 and the nozzle area NA may apply to any embodiment whether or not explicitly described herein. For example, any description relating to the shape of the inner boundary 140, 140' may apply to any embodiment, whether or not explicitly described herein.

In the Figure 5 embodiment, a flexible membrane 130 is provided on a downstream, or trailing edge, portion of the fixed portion 110 in order to accommodate upstream movement of the movable portion 120, such as that shown in Figure 5c. As the movable portion 120 moves upstream, an upstream portion of the movable portion 120 remains in contact with, and/or forms a seal with, the flexible membrane 130. The flexible membrane 130 flexes, for example deforms, for example elastically deforms, under the action of the movable portion 120 as it is moved to an upstream position shown in Figure 5c.

Other configurations of embodiments including a flexible membrane 130 may be used. For example, a flexible membrane may be provided on the upstream side of the movable portion 120, for example at least over the portion where the downstream portion 120 engages the upstream portion 110.

Figures 7a and 7b show a configuration in which at least one hinged portion is used to allow the downstream element 120 to move upstream from a datum position. The downstream element 120 is shown in the datum position in Figure 7a, and in an upstream position relative to the datum position in Figure 7b. The Figure 7a and 7b configuration comprises a hinged portion 170 which is mounted on, and may be considered to be a part of, the fixed portion 110. The hinged portion 170 in this embodiment is a rotatable hinged portion 170 that is configured to rotate about a hinge 175.

As shown in Figure 7b, as the movable portion 120 is moved upstream of the datum position, in the direction of the arrow q, the hinged portion 170 is configured to rotate about the hinge 175. This enables part of the movable element 120 to move inside the fixed element 110. A seal may be maintained between the fixed portion 110 and the movable portion 120 as the movable portion is moved upstream from the datum position, for example between the movable portion 120 and the hinged portion 170. As such, no flow may pass between the movable portion 120 and the fixed element 110 when the movable portion is in the datum position or upstream thereof. The hinged portion 170 may be biased towards its closed position shown in Figure 7a when it is in the rotated position shown in Figure 7b. For example, the hinged portion 170 may be biased towards its closed position by the hinge 175, which may be a spring loaded hinge 175.

The Figure 7a and 7b embodiment may comprise more than one hinged portion 170. The hinged portions 170 (or at least a part of the hinged portions) may circumferentially overlap with neighbouring hinged portions 170. This may allow the hinged portions to move in the direction of arrow r, by rotating about hinge 175, without a gap forming between neighbouring hinged portions.

When the movable portion 120 is moved in the downstream direction relative to the datum configuration shown in Figure 7a (not shown in the Figures), the hinged portion 170 may remain in the closed position shown in Figure 7a. As with the Figure 5 embodiment, a secondary flow path may open between the movable portion 120 and the fixed portion 110 when the movable portion is moved downstream of the datum position.

In alternative arrangements, for example, the hinged portion may be provided on an upstream part of the movable portion 120 rather than on the fixed portion 110.

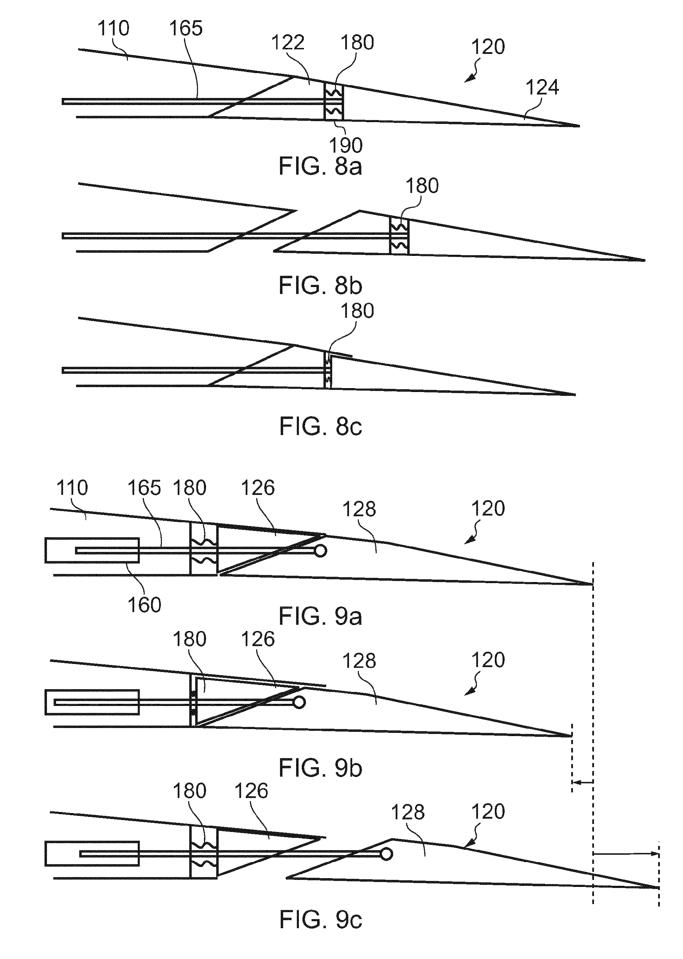

Figures 8a, 8b, and 8c show a configuration in which the movable portion 120 comprises a spring 180. The spring 180 could be any compressible element, such as (by way of non-limitative example) a coil spring (which may extend circumferentially) or a resilient element, such as an elastically deformable foam element. The movable portion 120 comprises an upstream element (or upstream movable portion) 122 and a downstream element (or downstream movable portion) 124. In the Figure 8 arrangement, the upstream element 122 is connected to the downstream element 124 via the spring 180. Thus, the spring 180 is disposed between the upstream element 122 and the downstream element 124.

Figure 8a shows the movable portion 120 in the datum position. In the datum position, the upstream element 122 of the movable portion 120 engages with the fixed portion 110, such that there is substantially no flow path therebetween. In Figure 8b, the movable portion 120 has moved downstream. This may mean that the upstream element 122 and the downstream element 124 of the movable portion 120 have moved downstream together from the datum position, with substantially no relative movement between the upstream element 122 and the downstream element 124.

In Figure 8c, the downstream element 124 has moved upstream. The downstream element 124 has moved upstream relative to both the upstream element 122 (which may remain stationary relative to the fixed portion 110) and relative to the fixed portion 110. The upstream element 122 may remain stationary relative to the fixed portion 110. In order to accommodate the upstream movement of the downstream element 124, the spring 180 is compressed. As such, the axial spacing between the downstream element 124 and the upstream element 122 decreases. This means that the trailing edge of the movable portion 120 moves upstream, and thus the nozzle exit area changes, for example decreases as explained above in relation to Figures 5 and 6. Thus, the movable portion 120 in the Figure 8 embodiment may be said to be compressible.

The gap between the upstream and downstream elements 122, 124 in which the spring is located is sealed with a sealing flap 190 in the Figure 8 arrangement. The sealing flap 190 may comprise a radially inner sealing flap and a radially outer sealing flap. Each of the radially inner and radially outer sealing flaps may comprise a plurality of sealing flap leaves, parts of which may overlap neighbouring sealing flap leaves in some configurations, for example the configuration shown in Figure 8c. The sealing flap or sealing flap leaves 190 are configured so as to provide a smooth flow path for the nozzle flow past the outer boundary and/or so as to ensure that no nozzle flow passes through the movable portion 120. The or each sealing flap 190 may be biased so as to maintain the seal between the upstream and downstream elements 122, 124. For example, the or each sealing flap 190 may be mounted on the upstream element 122 and radially biased towards the downstream element 124, or mounted on the downstream element 124 and radially biased towards the upstream element 122. The bias of the sealing flap(s) may be provided, for example, by a hinge, for example a sprung hinge. Sealing flaps 190 such as those described above in relation to Figure 8 may be provided to any suitable embodiment, including the embodiment shown in Figure 9 and discussed below.

Figures 9a, 9b, and 9c show another configuration in which the moveable portion comprises a spring or compressible member 180, such as that described above in relation to Figures 8a-8c. The configuration of Figures 9a-9c includes an upstream movable portion 126 and a downstream movable portion 128, which together may be referred to as the movable portion 120. The upstream movable portion 126 is connected to the fixed portion 110 by the spring 180. The downstream movable portion 128 is connected to the fixed portion 110 by the actuator arm 165. The upstream movable portion 126 and the downstream movable portion 128 may not be directly connected to each other.

Figure 9a shows the arrangement in the datum position. In the Figure 9a configuration, the spring 180 may be undeformed, i.e. the spring 180 may be neither compressed nor expanded. In the Figure 9a configuration, there may be no gap, or substantially no gap between the upstream movable portion 126 and the downstream movable portion 128.

Figure 9b shows the arrangement when the upstream portion 126 and the downstream portion 128 have been moved in the upstream direction, for example under action of the actuator 160, thereby compressing the spring 180. This means that the trailing edge of the movable portion 120 moves upstream relative to the Figure 9a datum configuration, and thus the nozzle exit area changes, for example decreases as explained above in relation to Figures 5 and 6.

Figure 9c shows the arrangement when the downstream movable portion 128 has been moved in the downstream direction, for example under action of the actuator 160. This means that the trailing edge of the movable portion 120 moves downstream relative to the Figure 9a datum configuration, and thus the nozzle exit area changes, for example increases as explained above in relation to Figures 5 and 6. The spring 180 remains undeformed in this configuration, as in the Figure 9a configuration.

Thus, the Figure 9a-9c configuration may be said to have a split movable portion 120. The downstream movable portion 128 may move both upstream and downstream from the datum configuration. The upstream movable portion 126 may only move upstream, but not downstream, from the datum configuration.

It will be appreciated that many alternative configurations and/or arrangements of the variable area nozzle 200 and/or the outer boundary 100 of the variable area nozzle 100 and components/parts thereof other than those described herein may fall within the scope of the invention. For example, alternative arrangements of movable portion 120, fixed portion 110 and elements, such as biasing elements, interacting therewith and/or components/parts thereof may fall within the scope of the invention and may be readily apparent to the skilled person from the disclosure provided herein. Furthermore, any feature described and/or claimed herein may be combined with any other compatible feature described in relation to the same or another embodiment.

## Claims

1. A variable area nozzle (200) for a gas turbine engine comprising:
an inner boundary (140) and an outer boundary (100) defining a generally annular nozzle flow path therebetween, the outer boundary (100) comprising a fixed portion (110) and a movable portion (120);
an actuator (160) configured to move the movable portion (120) in either an upstream direction or a downstream direction relative to a datum position; and
a biasing element (130, 170, 180) configured to provide a biasing force to at least a part of the movable portion (120) in the downstream direction when the movable portion (120) is moved to an upstream position, wherein:
an exit area (NA) of the nozzle flow path is defined between the movable portion (120) and the inner boundary (140), the inner boundary being shaped such that the exit area (NA) is dependent on the position of the movable portion (120); and
when the movable portion (120) is at the datum position or upstream thereof, the fixed portion (110) and the movable portion (120) are arranged so as to have no flow path therebetween.

2. A variable area nozzle (200) according to claim 1, wherein:
the actuator (160) is arranged to move the moveable portion (120) in a substantially axial direction; and
the exit area (NA) of the nozzle flow path is dependent on the axial position of the moveable portion (120).

3. A variable area nozzle (200) for a gas turbine engine according to claim 1 or claim 2, wherein when the movable portion (120) is at the datum position or upstream thereof, the outer boundary (100) forms a substantially continuous outer surface of the annular nozzle flow path.

4. A variable area nozzle (200) according to any one of the preceding claims, wherein the inner boundary (140) is shaped such that:
the exit area increases (NAd) as the movable portion is moved in the downstream direction from the datum position; and
the exit area decreases (NAu) as the movable portion is moved in the upstream direction from the datum position.

5. A variable area nozzle (200) according to any one of the preceding claims, wherein:
the movable portion (120) and the fixed portion (110) are in contact with each other at an interface when the movable portion (120) is in the datum position and upstream thereof; and
the biasing element comprises a flexible membrane (130) provided at the interface, the flexible membrane (130) configured to deform as the movable portion (120) is moved from the datum position in the upstream direction.

6. A variable area nozzle (200) according to any one of claim 1 to 4, wherein:
the movable portion (120) and the fixed portion (110) are in contact with each other at an interface when the movable portion (120) is moved in the upstream direction at least; and
the biasing element comprises a hinged portion (170) provided at the interface, the hinged portion (170) being configured to rotate as the movable portion (120) is moved from the datum position in the upstream direction.

7. A variable area nozzle (200) according to claim 5 or claim 6, wherein, when the movable portion (120) is in the datum position or in a position downstream thereof, the flexible membrane (130) is in an undeformed state or the hinged portion (170) is in a closed position.

8. A variable area nozzle (200) according to any one of claims 5 to 7, wherein the flexible membrane (130) or hinged portion (170) is provided on the fixed portion (110) of the outer boundary (100).

9. A variable area nozzle (200) according to any one of claims 5 to 7, wherein the flexible membrane (130) or hinged portion (170) is provided on the movable portion (120) of the outer boundary (100).

10. A variable area nozzle (200) according to any one of claims 5 to 8, wherein, when the movable portion (120) is in the datum position or in a position downstream thereof, the fixed portion (110) of the outer boundary (100) has a baseline shape in which the flexible membrane (130) or hinged portion (170) forms a seal with the rest of the fixed portion (110).

11. A variable area nozzle (200) according to any one of claims 1 to 4, wherein:
the biasing element comprises a spring (180); and
when the movable portion (120) is moved in the upstream direction from the datum position, the spring (180) is compressed.

12. A variable area nozzle (200) according to claim 11, wherein:
the movable portion (120) comprises an upstream element (122) and a downstream element (124); and
the upstream element (122) and the downstream element (124) are connected together by the spring (180) such that the downstream element (124) can be moved upstream relative to the upstream element (122) from the datum position through compression of the spring (180).

13. A variable area nozzle (200) according to any one of the preceding claims, further comprising a circumferential seal (190) arranged to form a substantially airtight seal between the fixed portion (110) and the movable portion (120), wherein:
the circumferential seal (190) is biased such that, when the movable portion (120) moves in the upstream direction from the datum position, the substantially airtight seal between the fixed portion (110) and the movable portion (120) is maintained.

14. A variable area nozzle (200) according to any one of the preceding claims, wherein at least a part of the actuator (160) passes through a downstream surface of the fixed portion (110) and an upstream surface of the movable portion (120).

15. A gas turbine engine (10) comprising a variable area nozzle (200) according to any one of the preceding claims.
